# EUROPÄISCHE PATENTANMELDUNG

(11) **EP 3 142 203 A1**
(43) Veröffentlichungstag der Anmeldung: **15.03.2017**
(21) Anmeldenummer: 15184591.4
(22) Anmeldetag: 10.09.2015
(51) Int. Cl.: H02G 3/08, F16L 5/04, A62C 3/16

(54) **DICHTBLOCK FÜR EINE KABELBOX UND KABELBOX**

(71) Anmelder: HILTI Aktiengesellschaft, 9494 Schaan (LI)
(72) Erfinder: Münzenberger, Herbert, 65191 Wiesbaden (DE); Zimmermann-Schäfer, Natalie, 80636 München (DE)
(74) Vertreter: Hilti Aktiengesellschaft Corporate Intellectual Property

(57) **Zusammenfassung**

Dichtblock (10, 10') für eine Kabelbox (100), wobei der Dichtblock (10, 10') eine erste Stirnfläche (11) aufweist, die rechteckförmig ist und wenigstens einen Schlitz (S) aufweist durch den ein Kabel (200) hindurchgeführt werden kann und wobei der Dichtblock (10, 10') eine zweite Stirnfläche (13) aufweist, die von der ersten Stirnfläche (11) abgewandt und beabstandet ist, wobei sich der Schlitz (S) ausgehend von der ersten Stirnfläche (11) und entlang einer Flächennormale (FN) der ersten Stirnfläche (11) in Richtung der zweite Stirnfläche (13) aufweitet, wobei ein keilförmiger Hohlraum (19) gebildet wird, der durch zwei an der zweiten Stirnfläche (13) verbliebene Stege, die parallel zu dem Schlitz (S) verlaufen, begrenzt ist.

## Beschreibung

Die vorliegende Erfindung betrifft einen Dichtblock für eine Kabelbox und eine Kabelbox.

Kabelboxen sind grundsätzlich aus dem Stand der Technik bekannt und dienen zur Kabeldurchführung bei Wänden, insbesondere um brandschutztechnischen Anforderungen zu genügen. Neben Brandschutzanordnungen müssen typischerweise auch Rauchgasdichtigkeit und Schallschutz gewährleistet sein. Kabelboxen des Standes der Technik weisen typischerweise ein oder mehrere Dichtblöcke auf, durch die ein Kabel oder Kabelbündel in die Kabelbox eingeführt beziehungsweise aus selbiger herausgeführt werden kann.

Aus dem Stand der Technik bekannte Dichtblöcke für Kabelboxen weisen eine erste Stirnfläche auf, die rechteckförmig ist und wenigstens einen Schlitz aufweist, durch den ein Kabel oder Kabelbündel hindurchgeführt werden kann. Die Dichtblöcke weisen jeweils eine zweite Stirnfläche auf, die von der ersten Stirnfläche abgewandt und beabstandet ist.

Es ist Aufgabe der vorliegenden Erfindung, einen Dichtblock und eine Kabelbox zu schaffen, die besonders einfach handhabbar sind und bei denen bevorzugt beim Durchführen von Kabeln oder Kabelbündel zusätzliche Maßnahmen zur Abdichtung gegen Rauch- oder Schalldurchtritt getroffen werden müssen.

Bezüglich des Dichtblocks wird die Aufgabe dadurch gelöst, dass sich der Schlitz ausgehend von der ersten Stirnfläche und entlang einer Stirnflächennormale der ersten Stirnfläche in Richtung der zweiten Stirnfläche aufweitet, wobei ein keilförmiger Hohlraum gebildet wird, der durch zwei an der zweiten Stirnfläche verbliebene Stege, die parallel zu dem Schlitz verlaufen, begrenzt ist.

Die Erfindung schließt diesbezüglich die Erkenntnis ein, dass Kabelboxen typischerweise mit Schaumformteilen abgedichtet werden, die, wenn ein neues Kabel verlegt werden muss, aus der Kabelbox entnommen und erneut angepasst werden müssen. Es wurde erkannt, dass ein einfaches Einschieben eines neuen Kabels nicht möglich ist, da die Dichtblöcke des Standes der Technik dann aus den typischerweise quaderförmigen Kabelboxen herausgeschoben werden.

Die Erfindung schließt ebenfalls die Erkenntnis ein, dass Dichtblöcke des Standes der Technik, die noppenförmige Kabelführungsflächen aufweisen, nicht geeignet sind dieses Problem zu beseitigen.

Diese Nachteile werden durch den erfindungsgemäßen Dichtblock vermieden. Durch die erfindungsgemäße Ausgestaltung des Dichtblocks mit einem keilförmigen Hohlraum, der im Sinne einer Führungsnut wirkt, wird ein in den Schlitz der ersten Stirnfläche eingeführtes Kabel oder Kabelbündel zwangsläufig hin zu einer entsprechenden zweiten Stirnfläche eines zweiten Dichtstopfens, die ihrerseits einen keilförmigen Hohlraum aufweist, geführt.

In einer bevorzugten Ausgestaltung ist der Dichtblock, bezogen auf seine Gesamtlänge entlang der Flächennormalen und ausgehend von der ersten Stirnfläche, wenigstens zu 1/4 und/oder höchstens zu 3/4 als Vollblock ausgebildet.

Es hat sich als vorteilhaft herausgestellt, wenn die erste Stirnfläche ein ungleichseitiges Rechteck ist, wobei sich der Schlitz parallel, bevorzugt nur parallel zu dessen kürzerer Seite erstreckt.

Um ein Einführen eines Kabels oder mehrerer Kabel oder eines Kabelbündels oder mehrerer Kabelbündel in den Dichtblock zu erleichtern, können die durch den Schlitz definierten Schnittflächen eine Gleitschicht aufweisen. Die Gleitschicht kann beispielsweise in Form einer Folie bereitgestellt sein, die die definierten Schnittflächen bevorzugt abdeckt. Alternativ oder zusätzlich kann die Gleitschicht in Form eines beschichteten Glasfasergewebes, einer Pappe oder eines Papiers, oder einer geeigneten Oberflächenstruktur, bereitgestellt werden.

Es hat sich als vorteilhaft herausgestellt, wenn der Dichtblock ein Polyurethan-RIM-Formteil ist. Vorzugsweise besteht der Dichtblock aus Schaumstoff, weiter bevorzugt aus einem vergleichsweise weichen PUR-Schaumstoff. Alternativ zur Bereitstellung als RIM-Formteil kann der Dichtblock auch geschnitten und/oder gefräst sein.

Ebenfalls vorteilhaft kann der Dichtblock ein oder mehrere Brandschutzadditive aufweisen.

In einer besonders bevorzugten Ausgestaltung weist die erste Stirnfläche wenigstens eine Nut auf, die sich beidseitig entlang des Schlitzes erstreckt. Auf diese Art und Weise kann ein Einführen des Kabels oder Kabelbündels in die erste Stirnfläche des Dichtblocks erleichtert werden.

In einer weiterbevorzugten Ausgestaltung weist die zweite Stirnfläche einen streifenförmigen Rand auf, der sich bevorzugt senkrecht zum Schlitz erstreckt und den keilförmigen Hohlraum begrenzt. Die zweite Stirnfläche kann ebenfalls einen streifenförmigen Rand aufweisen, der sich parallel zum Schlitz erstreckt und den keilförmigen Hohlraum begrenzt. An einem derartig ausgebildeten streifenförmigen Rand können sich beispielsweise eine oder mehrere intumeszierende Einlagen einer Kabelbox abstützen.

Es hat sich als vorteilhaft herausgestellt, dass an der ersten Stirnfläche mehrere Schlitze ausgebildet sind, die vorzugsweise parallel zueinander verlaufen. In einer bevorzugten Weiterbildung sind an der ersten Stirnfläche fünf Schlitze ausgebildet, sodass unabhängig voneinander fünf Kabel oder Leitungen in den Dichtblock eingeführt werden können. Bevorzugt bildet jeder der Schlitze jeweils einen keilförmigen Hohlraum, wobei sich dieser ausgehend von der ersten Stirnfläche in Richtung der zweiten Stirnfläche jeweils aufweitet.

Bezüglich der Kabelbox wird die Aufgabe gelöst, durch eine Kabelbox mit einem quaderförmigen Gehäuse und mit wenigstens zwei vorbeschriebenen Dichtblöcken, die derart in dem Gehäuse angeordnet sind, dass die zweite Stirnfläche des ersten Dichtblocks der zweiten Stirnfläche des zweiten Dichtblocks zugewandt ist.

Dies hat den Vorteil, dass ein in den ersten Dichtblock eingeführtes Kabel durch den erfindungsgemäß ausgebildeten keilförmigen Hohlraum sicher, das heißt insbesondere verhakungsfrei, in den zweiten Dichtblock eingeführt werden kann.

Diesbezüglich schließt die Erfindung die Erkenntnis ein, dass Dichtblöcke, insbesondere solche aus Schaumstoff, angeordnet in quaderförmigen Gehäusen grundsätzlich eine einfache und preiswerte Lösung sind.

Allerdings müssen diese Dichtblöcke bei Kabelboxen des Standes der Technik nachteiligerweise bei jeder Änderung der Kabelbelegung herausgenommen, angepasst und erneut eingesetzt werden. Sofern die Dichtblöcke eingeklebt oder eingeklemmt sind, wurde ein Verhaken des Kabels bis hin zum Zerstören der Dichtblöcke beobachtet.

In einer vorteilhaften Ausgestaltung sind der erste und der zweite Dichtblock voneinander beabstandet angeordnet. Das Gehäuse der Kabelbox besteht vorzugsweise aus Metall.

Das Gehäuse der Kabelbox kann zweischalig mit einer Oberschale und einer Unterschale ausgebildet sein. Bevorzugt sind der erste und zweite Dichtblock in der Unterschale angeordnet. In der Oberschale können ein dritter und vierter Dichtblock angeordnet sein.

Die Dichtblöcke können identisch ausgebildet sein. Es hat sich als vorteilhaft herausgestellt, wenn der dritte und vierte Dichtblock in der Oberschale derart angeordnet sind, dass die zweite Stirnfläche des dritten Dichtblocks der zweiten Stirnfläche des vierten Dichtblocks zugewandt ist. Ebenfalls bevorzugt sind der dritte und vierte Dichtblock voneinander beabstandet. Vorzugsweise liegen, wenn die Oberschale und die Unterschale miteinander verbunden sind, der dritte Dichtblock unmittelbar auf dem ersten und/oder der zweite Dichtblock unmittelbar auf dem dritten Dichtblock auf. Vorzugsweise sind die Dichtblöcke in dem Gehäuse fixiert. Die Dichtblöcke können in dem Gehäuse beziehungsweise in den Gehäuseteilen beispielsweise eingeklebt sein.

In einer besonders bevorzugten Ausgestaltung ist das Gehäuse mit mindestens einer intumeszierenden Einlage ausgekleidet. Die intumeszierende Einlage verläuft vorzugsweise zwischen dem ersten und zweiten und/oder zwischen dem dritten und vierten Dichtblock.

Die zweite Stirnfläche des ersten Dichtblocks beziehungsweise der weiteren Dichtblöcke kann jeweils einen streifenförmigen Rand aufweisen, gegen die mindestens eine intumeszierende Einlage abgestützt ist.

Vorzugsweise ist die intumeszierende Einlage, die das Gehäuse auskleidet, zweiteilig ausgebildet. Vorzugsweise kann sowohl in der Oberschale als auch in der Unterschale ein Abschnitt der intumeszierenden Einlage vorgesehen sein. Die Abschnitte der intumeszierenden Einlage können an ihren Rändern eine Nut-Feder-Paarung aufweisen, sodass die intumeszierende Einlage bei geschlossenem Gehäuse der Kabelbox abgedichtet ist.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen. In den Figuren sind gleiche und gleichartige Komponenten mit gleichen Bezugszeichen beziffert.

Es zeigen:
- Fig. 1: eine perspektivische Darstellung eines erfindungsgemäßen Dichtblocks;
- Fig. 2: eine perspektivische Darstellung einer erfindungsgemäßen Kabelbox in geschlossenem Zustand;
- Fig. 3: die Kabelbox der Fig. 2 in geöffnetem Zustand.

### Ausführungsbeispiele

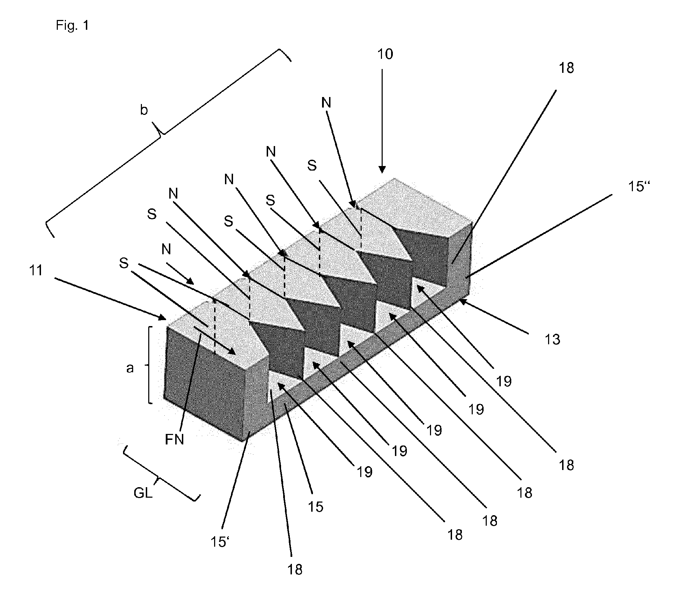

Ein erfindungsgemäßer Dichtblock 10 ist in Fig. 1 dargestellt. Der Dichtblock 10 weist eine Stirnfläche 11 auf, die aufgrund der perspektivischen Darstellung der Fig. 1 auf der Rückseite des Dichtblocks 10 befindlich ist. Im vorliegend dargestellten Ausführungsbeispiel ist die erste Stirnfläche 11 als ungleichseitiges Rechteck ausgebildet, wobei die rechteckförmige Stirnfläche 11 eine kürzere Seite a und eine längere Seite b aufweist.

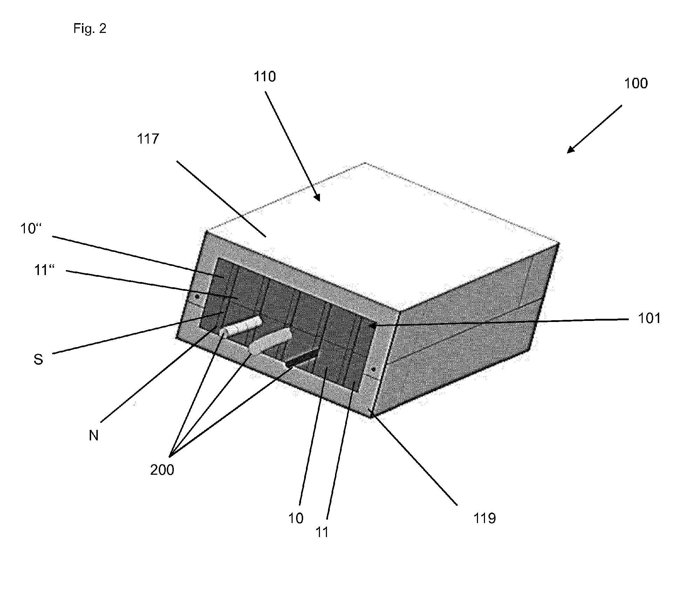

An der ersten Stirnfläche 11 sind fünf Schlitze S angeordnet, in die ein Kabel 200 (vgl. Fig. 2) hindurchgeführt werden kann. Wie der Fig. 1 entnommen werden kann, erstrecken sich die Schlitze S jeweils parallel zur kürzeren Seite a des Rechtecks, das die erste Stirnfläche 11 definiert.

Auf der ersten Stirnfläche 11, jeweils beidseitig entlang eines jeweiligen Schlitzes S erstreckt sich eine Nut N, die ein Einführen eines Kabels 200 (vgl. Fig. 2) in den Dichtblock 10 erleichtert.

Der Dichtblock 10 weist eine zweite Stirnfläche 13 auf, die vorliegend aus der Bildebene heraus weist.

Erfindungsgemäß erstrecken sich der Schlitz S beziehungsweise die Schlitze S ausgehend von der ersten Stirnfläche 11 und entlang einer Flächennormale FN der ersten Stirnfläche 11 in Richtung der zweiten Stirnfläche 13, vorzugsweise parallel zu dieser. Dabei werden jeweils keilförmige Hohlräume 19 gebildet. Die keilförmigen Hohlräume 19 sind jeweils beidseitig durch zwei an der Stirnfläche 13 verbliebene Stege 18 begrenzt. Die Stege 18 verlaufen jeweils parallel zu dem Schlitz S.

Wie ebenfalls der Fig. 1 entnommen werden kann, ist der Dichtblock 10, bezogen auf seine Gesamtlänge GL, entlang der Flächennormale FN und ausgehend von der ersten Stirnfläche 11 nur etwa hälftig als Vollblock ausgebildet. Mit anderen Worten beginnt die Aufweitung der Schlitze S in die keilförmigen Hohlräume 19 erst etwa ab der Hälfte des Dichtblocks 10, bezogen auf die Gesamtlänge GL des Dichtblocks 10.

Wie ebenfalls dem in Fig. 1 dargestellten Ausführungsbeispiel entnommen werden kann, weist die zweite Stirnfläche 13 vorliegend einen Rand bestehend aus streifenförmigen Abschnitten 15, 15', 15" auf. Der untere streifenförmige Rand 15, der sich entlang der Länge b des Dichtblocks 10 erstreckt, verläuft senkrecht zu den Schlitzen S und begrenzt den keilförmigen Hohlraum 19 auf der Unterseite. Zwei weitere Abschnitte 15' und 15" des streifenförmigen Randes verlaufen parallel zu den Schlitzen S und bilden gleichsam jeweils einen Steg 18, der den jeweils am weitest außenliegenden keilförmigen Hohlraum 19 begrenzt.

Fig. 2 zeigt eine erfindungsgemäße Kabelbox 100. Diese weist ein quaderförmiges Gehäuse 110 auf, das vorliegend durch zweischalig mit einer Oberschale 117 und einer Unterschale 119 ausgebildet ist und aus Metall besteht.

In einem Fenster 101 auf der Vorderseite der Kabelbox 100 ist ein erfindungsgemäßer Dichtblock 10 angeordnet, in den vorliegend drei Kabel 200 eingeführt sind. Auf dem ersten Dichtblock 10 ist ein dritter Dichtblock 10" aufliegend, wobei der erste Dichtblock 10 der Unterschale 119 zugeordnet und der dritte Dichtblock 10" der Oberschale 117 zugeordnet ist.

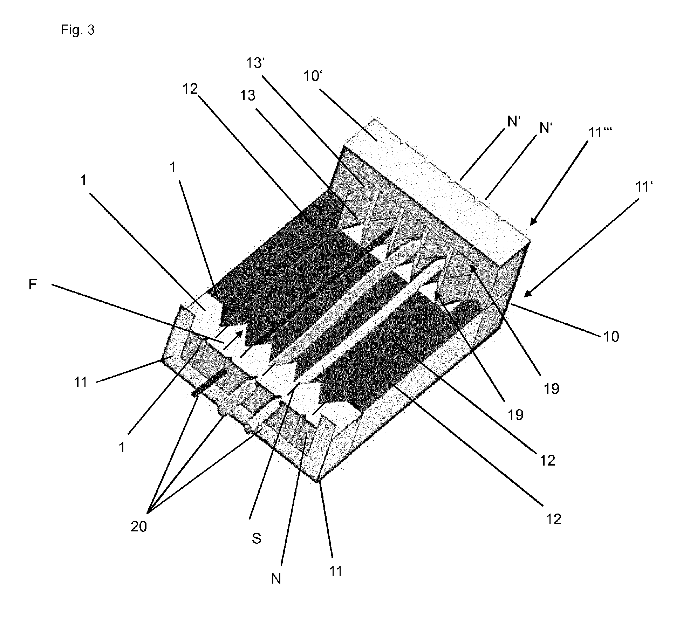

Ein zweiter und ein vierter Dichtblock sind in Fig. 2 nicht dargestellt, werden nun aber mit Bezug auf Fig. 3 genauer erläutert. Fig. 3 zeigt dazu die Kabelbox 100 der Fig. 2 in geöffnetem Zustand, wobei aus Darstellungsgründen der dritte Dichtblock (vgl. Fig. 2) nicht dargestellt ist.

Wie aus Fig. 3 ersichtlich ist, sind in der Unterschale 119 der erste Dichtblock 10 und der zweite Dichtblock 10' angeordnet. Dabei sind diese innerhalb der Unterschale 119 derart angeordnet, dass die zweite Stirnfläche 13 des ersten Dichtblocks 10 der zweiten Stirnfläche 13' des zweiten Dichtblocks 10' zugewandt ist.

Weiterhin sind der erste Dichtblock 10 und der zweite Dichtblock 10' voneinander beabstandet angeordnet. Gleiches gilt für den dritten Dichtblock 10" (vgl. Fig. 2) und den vierten Dichtblock 10"' der Fig. 3. Wie ebenfalls der Fig. 3 entnommen werden kann, ist das Gehäuse 110 mit einer intumeszierenden Einlage 120 ausgekleidet. Die intumeszierende Einlage 120 ist zweiteilig ausgebildet, wobei der untere Teil vorliegend die Unterschale 119 auskleidet.

Die intumeszierende Einlage 120 weist eine sich parallel zur Flächennormalen FN der ersten Oberfläche 11 erstreckende Feder 121 und eine parallel dazu verlaufende Nut 123 auf der gegenüberliegenden Seite auf. Gleiches gilt in umgekehrtem Fall für den hier nicht dargestellten und in der Oberschale 117 befindlichen Teil der intumeszierenden Einlage 120. Durch die Feder 121 und die Nut 123 wird eine Nutfederverbindung realisiert, die die intumeszierende Einlage 120 zur Umgebung hin abdichtet. Die Dichtblöcke 10, 10', 10", 10"', die vorzugsweise als Polyurethan-RIM-Formteile bereitgestellt sind, dienen sowohl als Rauch- als auch als Schallschutzblock.

### Bezugszeichenliste

- 10, 10', 10", 10"': Dichtblock
- 11, 11" 11", 11"': erste Stirnfläche
- 13, 13', 13", 13"': zweite Stirnfläche
- 15, 15', 15": streifenförmiger Rand
- 18: Steg
- 19, 19', 19", 19"': Keilförmiger Hohlraum
- 100: Kabelbox
- 101: Fenster der Kabelbox
- 117: Oberschale
- 119: Unterschale
- 120: Intumeszierende Einlage
- 200: Kabel
- a: Kurze Seite der Stirnfläche
- b: Lange Seite der Stirnfläche
- GL: Gesamtlänge des Dichtblocks
- FN: Flächennormale
- S: Schlitz

## Patentansprüche

1. Dichtblock (10) für eine Kabelbox (100), wobei der Dichtblock (10) eine erste Stirnfläche (11) aufweist, die rechteckförmig ist und wenigstens einen Schlitz (S) aufweist durch den ein Kabel (200) hindurchgeführt werden kann und wobei der Dichtblock (10) eine zweite Stirnfläche (13) aufweist, die von der ersten Stirnfläche (11) abgewandt und beabstandet ist,
**dadurch gekennzeichnet, dass** sich der Schlitz (S) ausgehend von der ersten Stirnfläche (11) und entlang einer Flächennormale (FN) der ersten Stirnfläche (11) in Richtung der zweite Stirnfläche (13) aufweitet, wobei ein keilförmiger Hohlraum (19) gebildet wird, der durch zwei an der zweiten Stirnfläche (13) verbliebene Stege (18), die parallel zu dem Schlitz (S) verlaufen, begrenzt ist.

2. Dichtblock (10) nach Anspruch 1,
**dadurch gekennzeichnet, dass** der Dichtblock (10, 10'), bezogen auf seine Gesamtlänge (GL) entlang der Flächennormale (FN) und ausgehend von der ersten Stirnfläche (11), wenigstens zu 1/4 und/oder höchstens zu 3/4 als Vollblock ausgebildet ist.

3. Dichtblock (10) nach Anspruch 1 oder 2,
**dadurch gekennzeichnet, dass** die erste Stirnfläche (11) ein ungleichseitig Rechteck ist, wobei sich der Schlitz (S) parallel, bevorzugt nur parallel zu dessen kürzerer Seite erstreckt.

4. Dichtblock (10) nach Anspruch 1 oder 2,
**dadurch gekennzeichnet, dass** die durch den Schlitz (S) definierten Schnittflächen (SF) eine Gleitschicht aufweisen.

5. Dichtblock (10) nach einem der vorangehenden Ansprüche,
**dadurch gekennzeichnet, dass** der Dichtblock (10) ein Polyurethan-RIM-Formteil ist.

6. Dichtblock (10) nach einem der vorangehenden Ansprüche,
**dadurch gekennzeichnet, dass** der Dichtblock (10) ein oder mehrere Brandschutzadditive aufweist.

7. Dichtblock (10) nach einem der vorangehenden Ansprüche,
**dadurch gekennzeichnet, dass** die erste Stirnfläche (11) wenigstens eine Nut (N) aufweist, die sich beidseitig entlang des Schlitzes (S) erstreckt.

8. Dichtblock (10) nach einem der vorangehenden Ansprüche,
**dadurch gekennzeichnet, dass** die zweite Stirnfläche (13) einen streifenförmigen Rand (15) aufweist, der sich senkrecht zum Schlitz (S) erstreckt und den keilförmigen Hohlraum (19) begrenzt.

9. Dichtblock (10) nach Anspruch 1 oder 2,
**dadurch gekennzeichnet, dass** an der ersten Stirnfläche (11) mehrere Schlitze (S) ausgebildet sind, die sich, jeweils einen keilförmiger Hohlraum (19) bildend, in Richtung der zweite Stirnfläche (13) aufweiten.

10. Kabelbox (100) mit einem quaderförmigen Gehäuse (110) und mit wenigstens zwei Dichtblöcken (10, 10') nach einem der vorangehenden Ansprüche, die derart in dem Gehäuse (110) angeordnet sind, dass die zweite Stirnfläche (13) des ersten Dichtblocks (10) der zweiten Stirnfläche (13') des zweiten Dichtblocks (10') zugewandt ist.

11. Kabelbox (100) nach Anspruch 10,
**dadurch gekennzeichnet, dass** der erste und zweite Dichtblock (10, 10') voneinander beabstandet angeordnet sind.

12. Kabelbox (100) nach Anspruch 10 oder 11,
**dadurch gekennzeichnet, dass** das Gehäuse (110) zweischalig mit einer Oberschale (117) und einer Unterschale (119) ausgebildet ist, wobei der erste und zweite Dichtblock (10, 10') in der Unterschale (119) angeordnet sind und ein dritter und vierter Dichtblock (10", 10"') in der Oberschale (117) angeordnet sind, derart, dass die zweite Stirnfläche (13") des dritten Dichtblocks (10") der zweiten Stirnfläche (13"') des vierten Dichtblocks (10"') zugewandt ist.

13. Kabelbox (100) nach Anspruch 12,
**dadurch gekennzeichnet, dass** der dritte und vierte Dichtblock (10", 10"') voneinander beabstandet angeordnet sind und, wenn die Oberschale (117) mit der Unterschale (119) verbunden ist, der dritte Dichtblock (10") unmittelbar auf dem ersten (10) und der vierte Dichtblock (10"') unmittelbar auf dem zweiten (10') aufliegt.

14. Kabelbox (100) nach einem der Ansprüche 10 bis 13,
**dadurch gekennzeichnet, dass** das Gehäuse (110) zwischen den Dichtblöcken (10, 10') mit einer intumeszierende Einlage (120) ausgekleidet ist.

15. Kabelbox (100) nach Anspruch 14,
**dadurch gekennzeichnet, dass** die zweite Stirnfläche (13) des ersten Dichtblocks (10) und die zweiten Stirnfläche (13') des zweiten Dichtblocks (10') jeweils einen streifenförmigen Rand (15) aufweisen, gegen den eine oder mehrere intumeszierenden Einlagen (120) abgestützt sind.
